# EUROPEAN PATENT APPLICATION

(11) **EP 4 851 436 A1**
(43) Date of publication of application: **09.12.2026**
(21) Application number: 26183169.7
(22) Date of filing: 04.06.2026
(51) Int. Cl.: F02C 3/107, B64D 27/00, B64D 27/10, F02C 7/36

(54) **AIRCRAFT PROPULSION SYSTEM WITH VARIABLE SPEED TRANSMISSION**

(30) Priority: 04.06.2025 US 202519227914
(71) Applicant: RTX Corporation, Farmington, CT 06032 (US)
(72) Inventor: SOBANSKI, Jon E., Glastonbury, 06033 (US); MORTON, Jeffrey T., Manchester, 06040 (US); BREAULT, Andrew E., Bolton, 06043 (US)
(74) Representative: Dehns

(57) **Abstract**

An assembly is provided for an aircraft (20). This assembly includes a propulsor rotor (62), a turbine engine (56) and a drivetrain (58). The propulsor rotor (62) is rotatable about a propulsor axis (48). The turbine engine (56) is configured to drive rotation of the propulsor rotor (62) about the propulsor axis (48). The turbine engine (56) includes a flowpath (76), a rotating structure (94), a compressor section (69), a combustor section (70) and a turbine section (71). The flowpath (76) extends through the compressor section (69), the combustor section (70) and the turbine section (71). The rotating structure (94) is rotatable about an engine axis (48). The rotating structure (94) includes a bladed turbine rotor (85) in the turbine section (71). The drivetrain (58) includes a reversible variable speed transmission (130). The drivetrain (58) operatively couples the rotating structure (94) to the propulsor rotor (62) through the reversible variable speed transmission (130).

## Description

### Technical Field

This disclosure relates generally to an aircraft and, more particularly, to one or more propulsion systems for the aircraft.

### Background Information

Various types and configurations of aircraft propulsion systems are known in the art including those with one or more open propulsor rotors. While these known aircraft propulsion systems have various benefits, there is still room in the art for improvement.

### SUMMARY

According to an aspect of the present invention, an assembly is provided for an aircraft. This assembly includes a propulsor rotor, a turbine engine and a drivetrain. The propulsor rotor is rotatable about a propulsor axis. The turbine engine is configured to drive rotation of the propulsor rotor about the propulsor axis. The turbine engine includes a flowpath, a rotating structure, a compressor section, a combustor section and a turbine section. The flowpath extends through the compressor section, the combustor section and the turbine section. The rotating structure is rotatable about an engine axis. The rotating structure includes a bladed turbine rotor in the turbine section. The drivetrain includes a reversible variable speed transmission. The drivetrain operatively couples the rotating structure to the propulsor rotor through the reversible variable speed transmission.

According to another aspect of the present invention, another assembly is provided for an aircraft. This assembly includes a first propulsion system and a second propulsion system. The first propulsion system includes a first propulsor rotor, a first turbine engine and a first drivetrain. The first propulsor rotor is rotatable about a first propulsor axis. The first turbine engine includes a first rotating structure rotatable about a first engine axis. The first rotating structure includes a first bladed turbine rotor. The first turbine engine is configured to drive rotation of the first propulsor rotor about the first propulsor axis through the first drivetrain. The first drivetrain includes a first variable speed transmission configured to operatively couple the first rotating structure to the first propulsor rotor. The second propulsion system includes a second propulsor rotor, a second turbine engine and a second drivetrain. The second propulsor rotor is rotatable about a second propulsor axis. The second turbine engine includes a second rotating structure rotatable about a second engine axis. The second rotating structure includes a second bladed turbine rotor. The second turbine engine is configured to drive rotation of the second propulsor rotor about the second propulsor axis through the second drivetrain. The second drivetrain includes a second variable speed transmission configured to operatively couple the second rotating structure to the second propulsor rotor. The first rotating structure is configured to rotate in a first direction about the first engine axis and the first propulsor rotor is configured to rotate in the first direction about the first propulsor axis during a forward thrust mode of operation for the first propulsion system. The second rotating structure is configured to rotate in the first direction about the second engine axis and the second propulsor rotor is configured to rotate in a second direction about the second propulsor axis during a forward thrust mode of operation for the second propulsion system.

According to still another aspect of the present invention, another assembly is provided for an aircraft. This assembly includes a propulsor rotor, a turbine engine and a drivetrain. The propulsor rotor is rotatable about a propulsor axis. The turbine engine is configured to drive rotation of the propulsor rotor about the propulsor axis. The turbine engine includes a flowpath, a rotating structure, a compressor section, a combustor section and a turbine section. The flowpath extends through the compressor section, the combustor section and the turbine section. The rotating structure is rotatable about an engine axis. The rotating structure includes a bladed turbine rotor in the turbine section. The drivetrain includes a variable speed transmission and an epicyclic geartrain. The drivetrain operatively couples the rotating structure to the propulsor rotor serially through the epicyclic geartrain and the variable speed transmission.

In an embodiment of the above, the propulsor rotor may be or otherwise include an open propulsor rotor. The variable speed transmission may be configured such that: the rotating structure rotates in a first direction about the engine axis and the propulsor rotor rotates in the first direction about the propulsor axis during a first mode of operation; and the rotating structure rotates in the first direction about the engine axis and the propulsor rotor rotates in a second direction about the propulsor axis during a second mode of operation.

In an embodiment according to any of the previous embodiments, the first variable speed transmission and/or the second variable speed transmission may each be configured as a reversible variable speed transmission.

In an embodiment according to any of the previous embodiments, the first drivetrain may also include a first geartrain with a first configuration. The first drivetrain may operatively couple the first rotating structure to the first propulsor rotor through the first variable speed transmission and the first geartrain. The second drivetrain may also include a second geartrain with a second configuration that is different than the first configuration. The second drivetrain may operatively couple the second rotating structure to the second propulsor rotor through the second variable speed transmission and the second geartrain.

In an embodiment according to any of the previous embodiments, the first geartrain may be configured as or otherwise include a planetary geartrain. The second geartrain may be configured as or otherwise include a star geartrain.

In an embodiment according to any of the previous embodiments, the reversible variable speed transmission may be configured such that: the rotating structure rotates in a first direction about the engine axis and the propulsor rotor rotates in the first direction about the propulsor axis during a first mode of operation; and the rotating structure rotates in the first direction about the engine axis and the propulsor rotor rotates in a second direction about the propulsor axis during a second mode of operation.

In an embodiment according to any of the previous embodiments, the reversible variable speed transmission may also be configured to operatively decouple the rotating structure from the propulsor rotor during a third mode of operation.

In an embodiment according to any of the previous embodiments, the propulsor rotor may be or otherwise include an open propulsor rotor.

In an embodiment according to any of the previous embodiments, the open propulsor rotor may include at least nine propulsor blades arranged circumferentially about the propulsor axis in an annular array.

In an embodiment according to any of the previous embodiments, the assembly may also include a propulsor section including the open propulsor rotor and an open guide vane structure. The open guide vane structure may be next to and configured to condition air for the open propulsor rotor.

In an embodiment according to any of the previous embodiments, the open guide vane structure may be downstream of the open propulsor rotor.

In an embodiment according to any of the previous embodiments, the drivetrain may also include a geartrain. The drivetrain may operatively couple the rotating structure to the propulsor rotor through the reversible variable speed transmission and the geartrain.

In an embodiment according to any of the previous embodiments, the geartrain may be or otherwise include an epicyclic geartrain.

In an embodiment according to any of the previous embodiments, the geartrain may be or otherwise include a planetary geartrain or a star geartrain.

In an embodiment according to any of the previous embodiments, the geartrain may operatively couple the reversible variable speed transmission to the propulsor rotor.

In an embodiment according to any of the previous embodiments, the reversible variable speed transmission may operatively couple the geartrain to the propulsor rotor.

In an embodiment according to any of the previous embodiments, the assembly may also include a first propulsion system and a second propulsion system. The first propulsion system may include the propulsor rotor, the turbine engine and the drivetrain. The rotating structure may be configured to rotate in a first direction about the engine axis and the propulsor rotor may be configured to rotate in the first direction about the propulsor axis during a forward thrust mode of operation for the first propulsion system. The second propulsion system may include a second propulsor rotor, a second turbine engine and a second drivetrain. The second propulsor rotor may be rotatable about a second propulsor axis. The second turbine engine may be configured to drive rotation of the second propulsor rotor about the second propulsor axis. The second turbine engine may include a second flowpath, a second rotating structure, a second compressor section, a second combustor section and a second turbine section. The second flowpath may extend through the second compressor section, the second combustor section and the second turbine section. The second rotating structure may be rotatable about a second engine axis. The second rotating structure may include a second bladed turbine rotor in the second turbine section. The second drivetrain may include a second reversible variable speed transmission. The second drivetrain may operatively couple the second rotating structure to the second propulsor rotor through the second reversible variable speed transmission. The second rotating structure may be configured to rotate in the first direction about the second engine axis and the second propulsor rotor may be configured to rotate in a second direction about the second propulsor axis during a forward thrust mode of operation for the second propulsion system.

In an embodiment according to any of the previous embodiments, the rotating structure and the second rotating structure may share a common configuration.

In an embodiment according to any of the previous embodiments, the turbine engine and the second turbine engine may share a common configuration.

In an embodiment according to any of the previous embodiments, the first propulsion system and the second propulsion system may each be configured as an open rotor propulsion system.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft with multiple propulsion systems mounted to wings of the aircraft.
FIG. 2 is a schematic illustration of the aircraft with its propulsion systems mounted to a fuselage of the aircraft.
FIG. 3 is a schematic illustration of an exemplary one of the propulsion systems with an exemplary drivetrain arrangement.
FIG. 4 is a partial schematic illustration of the exemplary propulsion system at a propulsion section with an exemplary transmission-geartrain arrangement.
FIG. 5 is a partial schematic illustration of the exemplary propulsion system at the propulsion section with another transmission-geartrain arrangement.
FIG. 6 is a partial schematic illustration of the exemplary propulsion system at a planetary geartrain.
FIG. 7 is a partial schematic end view illustration of the exemplary propulsion system of FIG. 6 at the planetary geartrain.
FIG. 8 is a partial schematic illustration of the exemplary propulsion system at a star geartrain.
FIG. 9 is a partial schematic end view illustration of the exemplary propulsion system of FIG. 8 at the star geartrain.
FIGS. 10A and 10B are front view illustrations of the aircraft depicting various symmetric propulsor rotating patterns.
FIG. 11 is a front view illustration of an aircraft depicting an asymmetric propulsor rotating pattern.
FIG. 12 is a schematic illustration of the exemplary propulsion system with another drivetrain arrangement.
FIGS. 13-17 are partial schematic illustrations of the exemplary propulsion system at a low pressure compressor rotor with various variable speed transmission arrangements.

### DETAILED DESCRIPTION

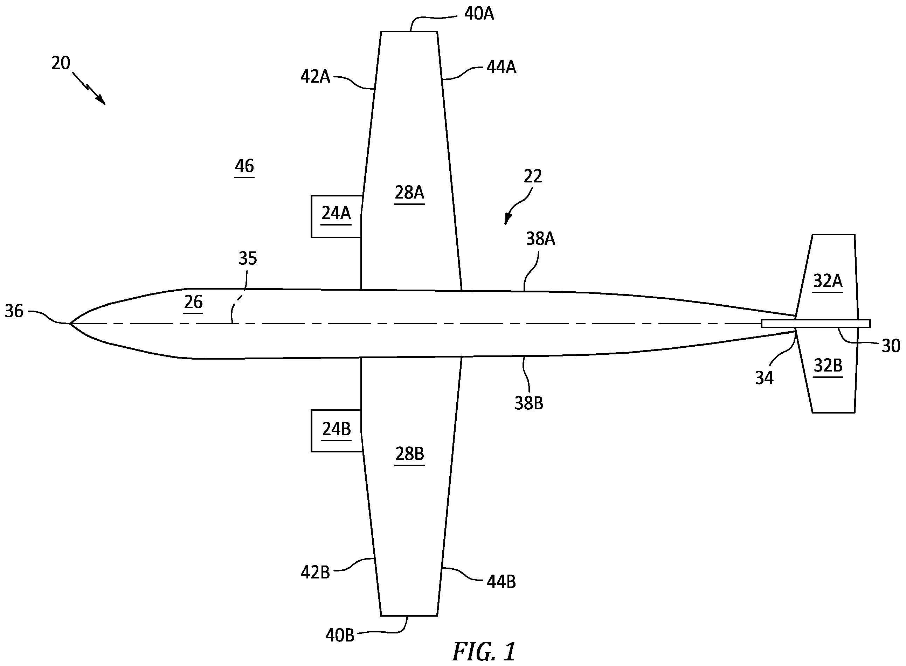

FIG. 1 is a schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22 and one or more aircraft propulsion systems 24A and 24B (generally referred to as "24"); e.g., a pair of companion aircraft propulsion systems.

The aircraft airframe 22 of FIG. 1 includes an aircraft fuselage 26 and one or more aircraft wings 28A and 28B (generally referred to as "28"). This aircraft airframe 22 may also include one or more aircraft stabilizers, such as at least one vertical stabilizer 30 and one or more horizontal stabilizers 32A and 32B arranged at (e.g., on, adjacent or proximate) an aft, downstream tail end 34 of the aircraft fuselage 26. However, in other embodiments, it is contemplated one or more of the aircraft stabilizers 30, 32A and/or 32B may be omitted where, for example, the aircraft 20 is alternatively configured as a blended wing aircraft.

The aircraft fuselage 26 extends longitudinally along a longitudinal centerline 35 of the aircraft airframe 22 and its aircraft fuselage 26 from a forward, upstream nose end 36 of the aircraft airframe 22 and its aircraft fuselage 26 to the fuselage tail end 34. The aircraft fuselage 26 extends laterally between and to opposing lateral sides 38A and 38B (generally referred to as "38") of the aircraft fuselage 26.

The aircraft wings 28A and 28B are arranged to the opposing lateral sides 38A and 38B of the aircraft fuselage 26. The first aircraft wing 28A of FIG. 1, for example, is connected to the aircraft fuselage 26 at the fuselage first side 38A. The second aircraft wing 28B is connected to the aircraft fuselage 26 at the fuselage second side 38B. The aircraft fuselage 26 of FIG. 1 is thereby located laterally between the first aircraft wing 28A and the second aircraft wing 28B. Each of these aircraft wings 28A and 28B projects spanwise out from the aircraft fuselage 26 to a tip 40A, 40B of the respective aircraft wing 28A, 28B. Each of the aircraft wings 28A and 28B extends longitudinally between and to a leading edge 42A, 42B of the respective aircraft wing 28A, 28B and a trailing edge 44A, 44B of the respective aircraft wing 28A, 28B.

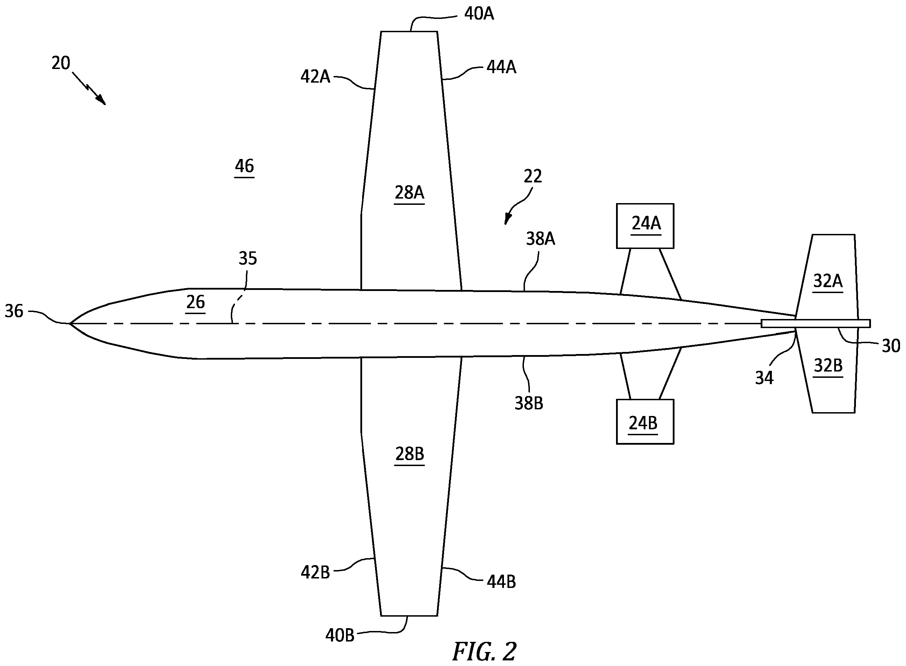

The aircraft propulsion systems 24A and 24B of FIG. 1 are arranged to the opposing lateral sides 38A and 38B of the aircraft fuselage 26. The first aircraft propulsion system 24A of FIG. 1, for example, is mounted to the first aircraft wing 28A. The second aircraft propulsion system 24B is mounted to the second aircraft wing 28B. The aircraft fuselage 26 of FIG. 1 is thereby located laterally between the first aircraft propulsion system 24A and the second aircraft propulsion system 24B. The present disclosure, however, is not limited to such an exemplary arrangement. For example, referring to FIG. 2, the first aircraft propulsion system 24A may alternatively be mounted to the aircraft fuselage 26 at the fuselage first side 38A. The second aircraft propulsion system 24B may alternatively be mounted to the aircraft fuselage 26 at the fuselage second side 38B.

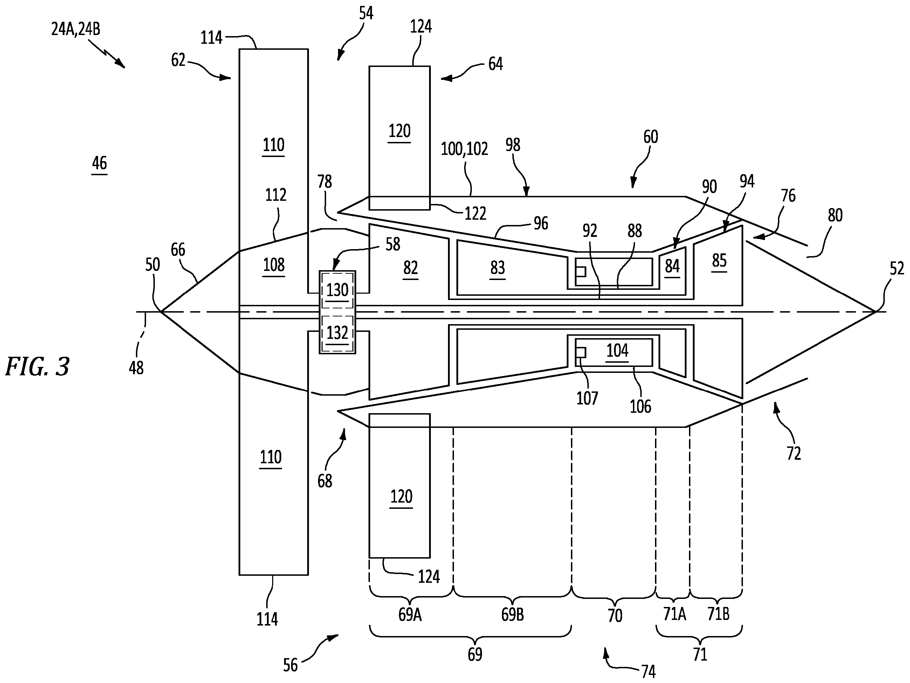

Referring to FIG. 3, each aircraft propulsion system 24 may be configured as an open rotor propulsion system with a single open propulsor rotor and swirl recovery vane (SRV) architecture. Herein, the term "open" may describe a propulsion system section and/or a propulsion system component which is open to an environment 46 (e.g., an ambient environment) external to the aircraft propulsion system 24 and, more generally, the aircraft 20 (see FIGS. 1 and 2).

Each aircraft propulsion system 24 extends axially along an axis 48 of the respective aircraft propulsion system 24 between an upstream, forward end 50 of the respective aircraft propulsion system 24 and a downstream, aft end 52 of the respective aircraft propulsion system 24. The propulsion system axis 48 may be a centerline axis of the respective aircraft propulsion system 24 and/or a centerline axis of one or more members of the respective aircraft propulsion system 24. The propulsion system axis 48 may also or alternatively be a rotational axis of one or more members of the respective aircraft propulsion system 24. The aircraft propulsion system 24 of FIG. 3 includes an open rotor propulsion section 54 (e.g., an open rotor propulsion module), a gas turbine engine 56, a drivetrain 58 and a stationary housing structure 60.

The propulsion section 54 includes an open propulsor rotor 62 and an open guide vane structure 64. These propulsion section members 62 and 64 are un-ducted components of the respective aircraft propulsion system 24 and its propulsion section 54. The propulsion section 54 of FIG. 3 also includes a nose cone 66 disposed at the propulsion system forward end 50. Briefly, this nose cone 66 may be configured as a spinner which is rotatable with the propulsor rotor 62 about the propulsion system axis 48. Alternatively, the nose cone 66 may be configured as a stationary structure of the propulsion section 54.

The turbine engine 56 is configured to power operation of the propulsion section 54. The turbine engine 56 includes an inlet section 68, a compressor section 69, a combustor section 70, a turbine section 71 and an exhaust section 72. The compressor section 69 of FIG. 3 includes a low pressure compressor (LPC) section 69A and a high pressure compressor (HPC) section 69B. The turbine section 71 of FIG. 3 includes a high pressure turbine (HPT) section 71A and a low pressure turbine (LPT) section 71B. At least (or only) the LPC section 69A, the HPC section 69B, the combustor section 70, the HPT section 71A and the LPT section 71B collectively form a core 74 (e.g., a gas generator) of the turbine engine 56. The aircraft propulsion system 24 of FIG. 3 and its turbine engine 56 also include an engine flowpath 76; e.g., an annular core flowpath. This engine flowpath 76 extends through the engine core 74 from an airflow inlet 78 into the engine flowpath 76 to a combustion products exhaust 80 from the engine flowpath 76. The flowpath inlet 78 of FIG. 3 is also an airflow inlet into the respective aircraft propulsion system 24 and its turbine engine 56. The flowpath exhaust 80 of FIG. 3 is also a combustion products exhaust from the respective aircraft propulsion system 24 and its turbine engine 56.

The LPC section 69A includes a bladed low pressure compressor (LPC) rotor 82. The HPC section 69B includes a bladed high pressure compressor (HPC) rotor 83. The HPT section 71A includes a bladed high pressure turbine (HPT) rotor 84. The LPT section 71B includes a bladed low pressure turbine (LPT) rotor 85. Each of these engine rotors 82-85 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 76. Each of the rotor blades is connected to the respective rotor base. Each of the rotor blades projects radially (e.g., spanwise) out from the respective rotor base into the engine flowpath 76 and to a distal tip of the respective rotor blade.

The HPC rotor 83 is coupled to and rotatable with the HPT rotor 84. The HPC rotor 83 of FIG. 3, for example, is connected to the HPT rotor 84 by a high speed shaft 88. At least (or only) the HPC rotor 83, the HPT rotor 84 and the high speed shaft 88 collectively form a high speed rotating structure 90; e.g., a high speed spool of the turbine engine 56 and its engine core 74. This high speed rotating structure 90 of FIG. 3 and its members 83, 84 and 88 are rotatable about the propulsion system axis 48. However, in other embodiments, the high speed rotating structure 90 and its members 83, 84 and 88 may alternatively be rotatable about another rotational axis (e.g., a high speed rotating structure axis or, more generally, an engine axis) that is laterally and/or angularly offset from the rotational axis of the propulsor rotor 62.

The LPC rotor 82 is coupled to and rotatable with the LPT rotor 85. The LPC rotor 82 of FIG. 3, for example, is connected to the LPT rotor 85 by a low speed shaft 92. At least (or only) the LPC rotor 82, the LPT rotor 85 and the low speed shaft 92 collectively form a low speed rotating structure 94; e.g., a low speed spool of the turbine engine 56 and its engine core 74. This low speed rotating structure 94 of FIG. 3 and its members 82, 85 and 92 are rotatable about the propulsion system axis 48. However, in other embodiments, the low speed rotating structure 94 and its members 82, 85 and 92 may alternatively be rotatable about another rotational axis (e.g., a low speed rotating structure axis or, more generally, the engine axis) that is laterally and/or angularly offset from the rotational axis of the propulsor rotor 62. Referring again to FIG. 3, the low speed rotating structure 94 and its low speed shaft 92 are also operatively coupled to the propulsor rotor 62 through the drivetrain 58.

The engine sections 68-72 may be arranged sequentially along the propulsion system axis 48 and are housed within and/or formed by the housing structure 60. This housing structure 60 includes an engine case 96 (e.g., a multi-section core case) and a propulsion system nacelle 98. The engine case 96 houses one or more of the engine sections 69A-71 B; e.g., the engine core 74. The engine case 96 of FIG. 3, for example, extends axially along (e.g., axially overlaps) and extends circumferentially about (e.g., circumscribes) the engine sections 69A-71B and the engine rotors 82-85. The engine case 96 may also house at least a portion of the drivetrain 58. The propulsion system nacelle 98 houses and provides an aerodynamic cover over the engine case 96. An exterior wall 100 of the propulsion system nacelle 98 of FIG. 3, for example, is disposed radially outboard of, extends axially along (e.g., axially overlaps) and extends circumferentially about (e.g., circumscribes) the engine core 74 and its engine case 96. This nacelle wall 100 may at least partially or completely form an exterior surface 102 of the housing structure 60 and borders the external environment 46. With the foregoing arrangement, the engine rotors 82-85 are disposed within the housing structure 60. By contrast, the propulsor rotor 62 and the guide vane structure 64 are disposed outside of the housing structure 60 and within the external environment 46.

During operation of the aircraft propulsion system 24 of FIG. 3, ambient air within the external environment 46 is propelled by the rotating propulsor rotor 62 in the downstream, aft direction towards the propulsion system aft end 52. A major portion (e.g., more than 50%) of this air bypasses the turbine engine 56 to provide forward thrust while a minor portion (e.g., less than 50%) of the air flows into the aircraft propulsion system 24 of FIG. 3 and its turbine engine 56. For example, an outer stream of the air propelled by the rotating propulsor rotor 62 flows axially across the guide vane structure 64 and outside of the housing structure 60 and its exterior surface 102; e.g., along an exterior of the propulsion system nacelle 98. The guide vane structure 64 conditions (e.g., straightens out, de-swirls, etc.) the outer stream of air within the external environment 46 to enhance the forward thrust. By contrast, an inner stream of the air propelled by the rotating propulsor rotor 62 may bypass the guide vane structure 64 and enter the turbine engine 56 and its engine flowpath 76 through the flowpath inlet 78. The air entering the engine flowpath 76 through the flowpath inlet 78 may be referred to as "core air".

The core air is compressed by the LPC rotor 82 and the HPC rotor 83 and directed into a combustion chamber 104 (e.g., an annular combustion chamber) of a combustor 106 (e.g., an annular combustor) in the combustor section 70. Fuel is injected into the combustion chamber 104 by one or more fuel injectors 107 and mixed with the compressed core air to provide a fuel-air mixture. This fuel-air mixture is ignited and combustion products thereof flow through and sequentially drive rotation of the HPT rotor 84 and the LPT rotor 85. The rotation of the HPT rotor 84 and the LPT rotor 85 respectively drive rotation of the HPC rotor 83 and the LPC rotor 82 and, thus, compression of the core air. The rotation of the LPT rotor 85 also drives the rotation of the propulsor rotor 62 through the drivetrain 58. The turbine engine 56 and its low speed rotating structure 94 thereby power operation of (e.g., drive rotation of) the propulsor rotor 62 during aircraft propulsion system operation.

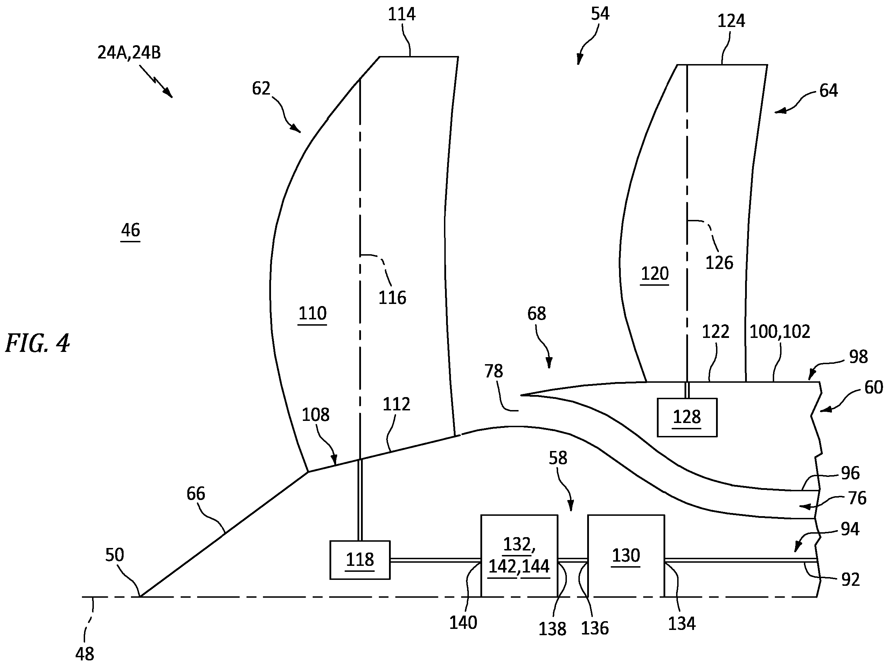

Referring to FIG. 4, the propulsor rotor 62 includes a rotor base 108 (e.g., a disk or a hub) and a plurality of open propulsor blades 110 (e.g., airfoils). The propulsor blades 110 are arranged and may be equispaced circumferentially about the rotor base 108 and the propulsion system axis 48 in an array; e.g., a circular array. This array of the propulsor blades 110 may be unshrouded or alternatively shrouded by a tubular propulsor rotor shroud dedicated to the propulsor rotor 62 for example. The propulsor blade array and, more generally, the propulsor rotor 62 may include a total number of nine (9) or more (e.g., twelve (12) or more) of the propulsor blades 110. Each of the propulsor blades 110 is connected to (e.g., formed integral with or otherwise attached to) the rotor base 108. Each of the propulsor blades 110 projects spanwise along a span line of the respective propulsor blade 110 (e.g., radially relative to the propulsion system axis 48) out from an exterior surface 112 of the rotor base 108, into the external environment 46, to a distal tip 114 of the respective propulsor blade 110. Here, the exterior surface 112 radially borders the external environment 46 and forms a platform surface of the propulsor rotor 62. Each propulsor blade 110 is thereby configured as an un-ducted propulsor blade which is exposed to (e.g., disposed in) the surrounding external environment 46.

Each propulsor blade 110 may be configured to pivot about a pivot axis 116 of the respective propulsor blade 110. This blade pivot axis 116 extends radially relative to the propulsion system axis 48, where the blade pivot axis 116 may or may not be perpendicular to the propulsion system axis 48. Each propulsor blade 110 of FIG. 4 is operatively coupled with a blade actuation system 118. This blade actuation system 118 is configured to pivot each propulsor blade 110 about its blade pivot axis 116. By pivoting each propulsor blade 110 about its blade pivot axis 116, a pitch of the respective propulsor blade 110 may be changed. However, it is contemplated some or all of the propulsor blades 110 may be alternatively moved to change the propulsor blade pitch and/or another propulsor blade parameter such as blade camber. Moreover, it is contemplated some or all of the propulsor blades 110 may alternatively be fixed position propulsor blades in other embodiments.

The guide vane structure 64 of FIG. 4 includes a plurality of open exit guide vanes 120 (e.g., airfoils). These guide vanes 120 are arranged and may be equispaced circumferentially about the propulsion system axis 48 in an array; e.g., a circular array. The array of the guide vanes 120 may be unshrouded or alternatively shrouded by a tubular guide vane shroud dedicated to the guide vane structure 64 for example. The guide vane structure 64 and its guide vanes 120 are arranged axially next to the propulsor rotor 62 and its propulsor blades 110. The guide vane structure 64 and its guide vanes 120 of FIG. 4, for example, are arranged downstream of the propulsor rotor 62 and its propulsor blades 110, without (e.g., any) other elements axially therebetween to obstruct, turn and/or otherwise influence the air propelled by the propulsor rotor 62 to the guide vane structure 64 for example. Each of the guide vanes 120 of FIG. 4 is coupled to a support structure 122 of the housing structure 60 (see also FIG. 3). This support structure 122 may be configured as or otherwise include a support frame, a case and/or another fixed structure of the housing structure 60. Each of the guide vanes 120 projects spanwise along a span line of the respective guide vane 120 (e.g., radially relative to the propulsion system axis 48) out from the exterior surface 102, into the external environment 46, to a distal tip 124 of the respective guide vane 120. Each guide vane 120 is thereby configured as an un-ducted guide vane which is exposed to (e.g., disposed in) the surrounding external environment 46.

Each guide vane 120 may be configured to pivot about a pivot axis 126 of the respective guide vane 120. This vane pivot axis 126 extends radially relative to the propulsion system axis 48, where the vane pivot axis 126 may or may not be perpendicular to the propulsion system axis 48. Each guide vane 120 of FIG. 4 is operatively coupled with a vane actuation system 128. This vane actuation system 128 may be discrete from or integrated as part of the blade actuation system 118. The vane actuation system 128 is configured to pivot each guide vane 120 about its respective vane pivot axis 126. By pivoting each guide vane 120 about its vane pivot axis 126, a pitch of the respective guide vane 120 may be changed. However, it is contemplated some or all of the guide vanes 120 may be alternatively moved to change the guide vane pitch and/or another guide vane parameter such as vane camber. Moreover, it is contemplated some or all of the guide vanes 120 may alternatively be fixed position guide vanes in other embodiments.

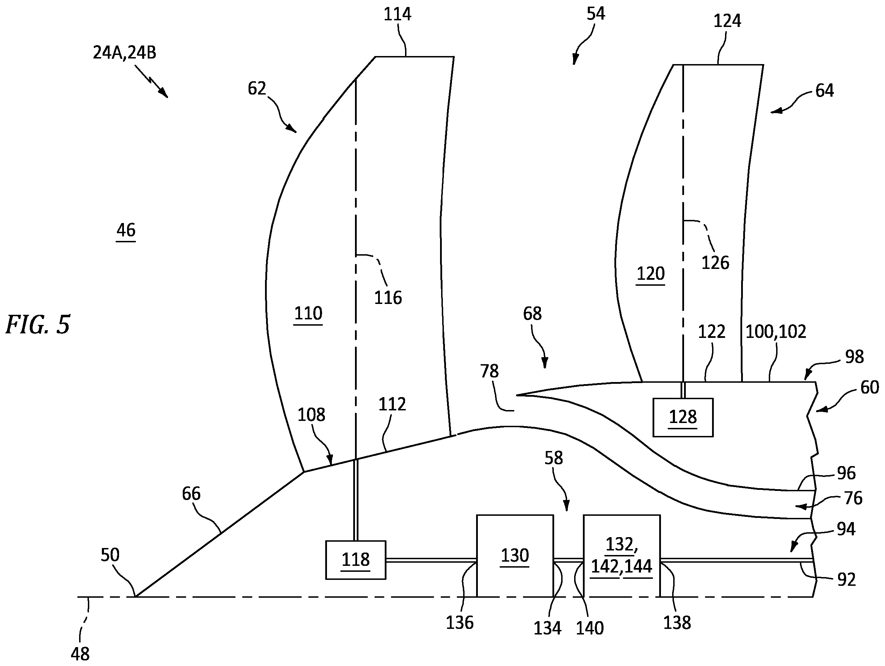

The drivetrain 58 may be configured as a geared drivetrain. The drivetrain 58 of FIG. 4, for example, includes a variable speed transmission 130 and a geartrain 132. These drivetrain members 130 and 132 are arranged operatively and axially inline between (a) the turbine engine 56 (see FIG. 3) and its low speed rotating structure 94 and (b) the propulsor rotor 62. For example, in the drivetrain arrangement of FIG. 4, an input 134 into the variable speed transmission 130 is operatively coupled to and is (e.g., directly) rotatable with the low speed rotating structure 94 and its low speed shaft 92. An output 136 from the variable speed transmission 130 is operably coupled to and is (e.g., directly) rotatable with an input 138 into the geartrain 132. An output 140 from the geartrain 132 is operably coupled to and is (e.g., directly) rotatable with the propulsor rotor 62. The drivetrain 58 of FIG. 4 thereby operatively couples the turbine engine 56 (see FIG. 3) and its low speed rotating structure 94 to the propulsion section 54 and its propulsor rotor 62 serially through the variable speed transmission 130 and the geartrain 132. The present disclosure, however, is not limited to such an exemplary arrangement. For example, referring to FIG. 5, the geartrain input 138 may be operatively coupled to and (e.g., directly) rotatable with the low speed rotating structure 94 and its low speed shaft 92. The geartrain output 140 may be operably coupled to and (e.g., directly) rotatable with the transmission input 134. The transmission output 136 may be operably coupled to and (e.g., directly) rotatable with the propulsor rotor 62. The drivetrain 58 of FIG. 5 thereby operatively couples the turbine engine 56 (see FIG. 3) and its low speed rotating structure 94 to the propulsion section 54 and its propulsor rotor 62 serially through the geartrain 132 and the variable speed transmission 130. In another example, it is contemplated the drivetrain 58 may omit the geartrain 132 such that the variable speed transmission 130 selectively provides the (e.g., only) speed change between the low speed rotating structure 94 and the propulsor rotor 62. However, for ease of description, the drivetrain 58 may be described below with reference to the arrangement of FIG. 4.

The variable speed transmission 130 may be configured as a continuously variable speed transmission (CVT). The variable speed transmission 130 may thereby facilitate a (e.g., continuously) variable speed ratio between (a) the low speed rotating structure 94 and its low speed shaft 92 and (b) the propulsor rotor 62. The variable speed transmission 130, for example, may be configured and/or controlled to maintain the rotation of the propulsor rotor 62 at a substantially (e.g., within 2% or 5%) or exact constant rotational velocity while (a) a rotational velocity of the low speed rotating structure 94 and its low speed shaft 92 varies (e.g., increases, decreases, or fluctuates up and down) and/or (b) the turbine engine 56 (see FIG. 3) operates across at least a portion of its power band. The operation of the turbine engine 56 (see FIG. 3) may thereby be adjusted to account for varying flight conditions, varying environmental conditions, varying mechanical power needs, varying electrical power needs and/or the like with reduced variation to the operability and/or efficiency of the propulsion section 54 and its propulsor rotor 62. Providing the variable speed ratio between the propulsor rotor 62 and the low speed rotating structure 94 also facilitates independent tuning of the rotational speeds of the propulsor rotor 62 and/or the low speed rotating structure 94 for increased (e.g., maximized) performance and/or efficiency during steady-state and/or transient aircraft propulsion system operation.

The variable speed transmission 130 may also be configured as a reversible variable speed transmission (RVT); e.g., a reversible continuous variable speed transmission (rCVT). With such an arrangement, the variable speed transmission 130 may be configured to rotate the propulsor rotor 62 in one direction during a forward thrust mode of operation to provide forward thrust, and rotate the propulsor rotor 62 in another direction during a reverse thrust mode of operation to provide reverse thrust. For example, during the forward thrust operating mode, the variable speed transmission 130 may be configured such that the low speed rotating structure 94 drives rotation of the transmission input 134 in a rotational first direction (e.g., a clockwise direction, or a counterclockwise direction) about the propulsion system axis 48, and the variable speed transmission 130 drives its transmission output 136 in the first direction about the propulsion system axis 48. By contrast, during the reverse thrust operating mode, the variable speed transmission 130 may be configured such that the low speed rotating structure 94 drives rotation of the transmission input 134 in the first direction about the propulsion system axis 48, and the variable speed transmission 130 drives its transmission output 136 in a rotational second direction (e.g., the counterclockwise direction, or the clockwise direction) about the propulsion system axis 48, which second direction is rotationally opposite the first direction. Alternatively, it is contemplated the variable speed transmission 130 may be configured such that the transmission input 134 rotates in the first direction and the transmission output 136 rotates in the second direction during the forward thrust operating mode, and the transmission input 134 rotates in the first direction and the transmission output 136 rotates in the first direction during the reverse thrust operating mode. The propulsor rotor 62 may thereby provide forward thrust and reverse thrust without, for example, reversing pitches of the propulsor blades 110. The reversible rotation functionality of the variable speed transmission 130 may therefore obviate challenges associated with moving propulsor blades 110 through feather pitch and/or flat pitch positions. The reversible rotation functionality of the variable speed transmission 130 may also or alternatively facilitate increasing propulsor blade chord, decreasing inter-blade spacing and/or increasing propulsor blade-blade count.

The variable speed transmission 130 may (or may not) also be operable in a neutral mode of operation where the variable speed transmission 130 operatively decouples the low speed rotating structure 94 and its low speed shaft 92 from the propulsor rotor 62. The turbine engine 56 (see FIG. 3) may thereby continue to operate without driving the rotation of the propulsor rotor 62 and/or the propulsor rotor 62 may windmill independent of the low speed rotating structure 94.

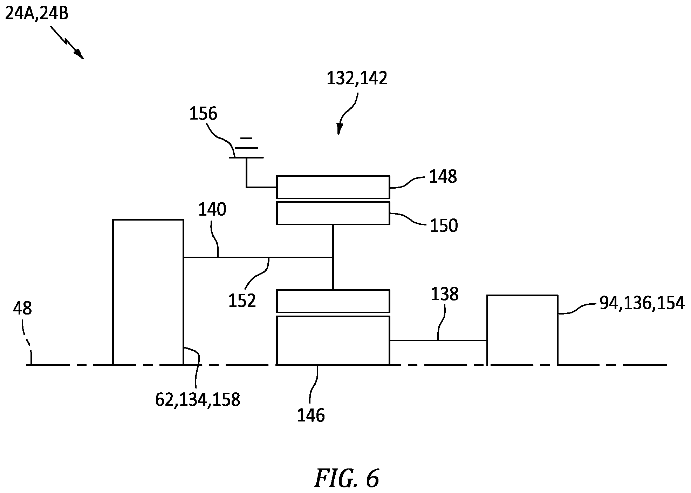

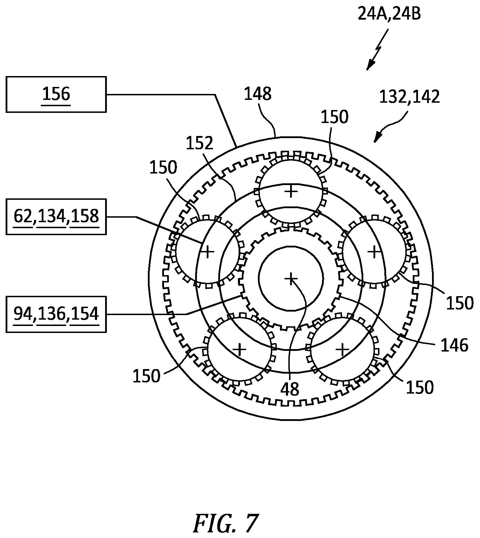

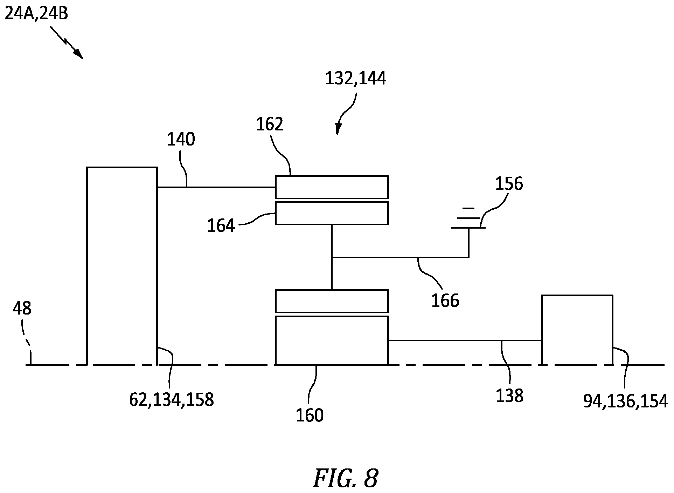

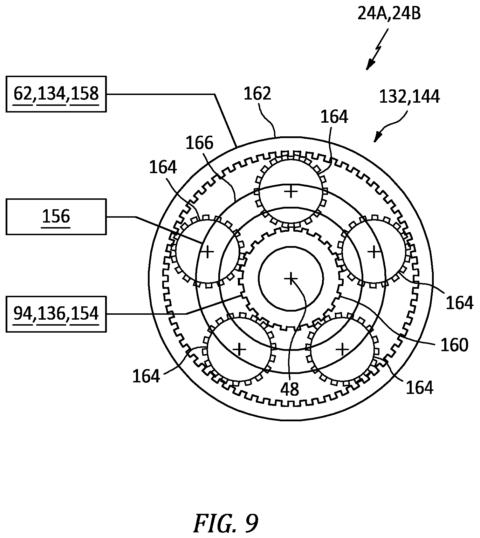

The geartrain 132 may be configured as a speed reduction device where the geartrain input 138 rotates faster than the geartrain output 140. The propulsor rotor 62 may thereby rotate slower than the low speed rotating structure 94 and its low speed shaft 92. Of course, a specific speed ratio between the propulsor rotor 62 and the low speed rotating structure 94 is further influenced (e.g., increased and/or decreased) by the variable speed transmission 130 as described above. The geartrain 132 may be configured as an epicyclic geartrain such as a planetary geartrain 142 (e.g., see FIGS. 6 and 7) or a star geartrain 144 (e.g., see FIGS. 8 and 9). The present disclosure, however, is not limited to such exemplary geartrain arrangements. For example, it is contemplated the geartrain 132 may alternatively include multiple gear systems arranged in series and/or the geartrain 132 may be an offset geartrain.

Referring to FIGS. 6 and 7, the planetary geartrain 142 includes a sun gear 146, a stationary ring gear 148, a plurality of intermediate gears 150 (e.g., planet gears) and a carrier 152. The sun gear 146 is rotatable about the propulsion system axis 48, or another axis where the turbine engine is offset from the propulsor rotor for example. The sun gear 146 is coupled to and (e.g., directly) rotatable with a drive element 154. The drive element 154 is thereby operatively coupled to the planetary geartrain 142 through the sun gear 146. The drive element 154 may be the transmission output 136 (see FIG. 4) or the low speed rotating structure 94 (see FIG. 5). The ring gear 148 circumscribes the sun gear 146 and an array of the intermediate gears 150. The ring gear 148 is fixedly connected to a stationary structure 156 of the respective aircraft propulsion system 24. The intermediate gears 150 are arranged circumferentially about the propulsion system axis 48 and the sun gear 146 in the array; e.g., an annular array. Each of the intermediate gears 150 is disposed radially between and meshed with the sun gear 146 and the ring gear 148. Each of the intermediate gears 150 is rotatably mounted to the carrier 152. The carrier 152 is rotatable about the propulsion system axis 48. The carrier 152 is coupled to and (e.g., directly) rotatable with a driven element 158. The driven element 158 is thereby operatively coupled to the planetary geartrain 142 through the carrier 152. The driven element 158 may be the propulsor rotor 62 (see FIG. 4) or the transmission input 134 (see FIG. 5).

Referring to FIGS. 8 and 9, the star geartrain 144 includes a sun gear 160, a ring gear 162, a plurality of intermediate gears 164 (e.g., star gears) and a stationary carrier 166. The sun gear 160 is rotatable about the propulsion system axis 48, or another axis where the turbine engine is offset from the propulsor rotor for example. The sun gear 160 is coupled to and (e.g., directly) rotatable with the drive element 154. The drive element 154 is thereby operatively coupled to the star geartrain 144 through the sun gear 160. The ring gear 162 circumscribes the sun gear 160 and an array of the intermediate gears 164. The ring gear 162 is rotatable about the propulsion system axis 48. The ring gear 162 is coupled to and (e.g., directly) rotatable with the driven element 158. The driven element 158 is thereby operatively coupled to the star geartrain 144 through the ring gear 162. The intermediate gears 164 are arranged circumferentially about the propulsion system axis 48 and the sun gear 160 in the array; e.g., an annular array. Each of the intermediate gears 164 is disposed radially between and meshed with the sun gear 160 and the ring gear 162. Each of the intermediate gears 164 is rotatably mounted to the carrier 166. The carrier 166 is fixedly connected to the stationary structure 156.

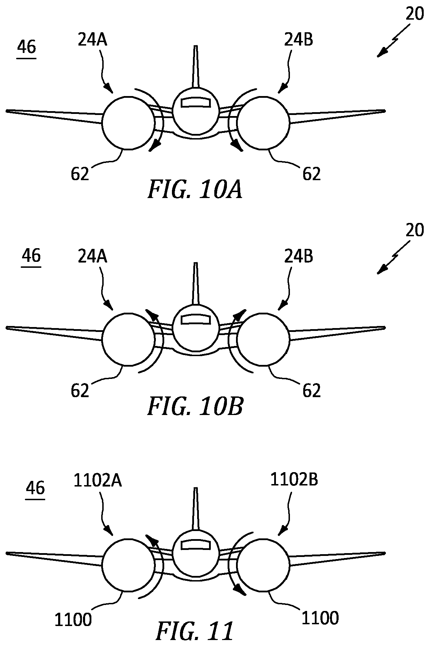

Referring to FIG. 3, the first aircraft propulsion system 24A is configured such that its propulsor rotor 62 rotates in the first direction about its propulsion system axis 48. By contrast, the second aircraft propulsion system 24B is configured such that its propulsor rotor 62 rotates in the second direction about its propulsion system axis 48. Referring to FIGS. 10A and 10B, the propulsor rotor 62 of the first aircraft propulsion system 24A and the propulsor rotor 62 of the second aircraft propulsion system 24B thereby rotate in different rotational directions during aircraft flight. In FIG. 10A, the propulsor rotors 62 of the aircraft propulsion systems 24A and 24B rotate in an inboard down-down symmetric rotating pattern. In FIG. 10B, the propulsor rotors 62 of the aircraft propulsion systems 24A and 24B rotate in an inboard up-up symmetric rotating pattern. Such symmetric rotating patterns may facilitate a reduction in propulsion system noise, an increase in propulsion system performance, provision of symmetric control surface geometries, etc. By contrast, FIG. 11 illustrates propulsor rotors 1100 of right and left side aircraft propulsion systems 1102A and 1102B rotating in an asymmetric rotating pattern.

In some embodiments, to facilitate the symmetric rotating pattern of FIG. 10A or FIG. 10B, referring now to FIG. 3, the variable speed transmission 130 (e.g., the reversible variable speed transmission) of the first aircraft propulsion system 24A and the variable speed transmission 130 (e.g., the reversible variable speed transmission) of the second aircraft propulsion system 24B may be operated according to opposite schedules. For example, during the forward thrust operating mode, the variable speed transmission 130 of the first aircraft propulsion system 24A may be operated such that the transmission output 136 (similar to the transmission input 134) rotates in the first direction about the respective propulsion system axis 48. By contrast, during the forward thrust operating mode, the variable speed transmission 130 of the second aircraft propulsion system 24B may be operated such that the transmission output 136 (opposite to the transmission input 134) rotates in the second direction about the respective propulsion system axis 48. With such an arrangement, the aircraft propulsion systems 24A and 24B may share a common turbine engine configuration, a common engine core configuration, a common nose cone configuration, and/or at least one or more common internal core components and/or structures; e.g., the rotating structure(s) 90, 94, the combustor 106, etc. Herein, the term "common" may describe elements which are identical and may share a single manufacturer / supplier part number. The aircraft propulsion systems 24A and 24B may (or may not) also share a common geartrain configuration. For example, the geartrain 132 of each aircraft propulsion system 24A, 24B may be the planetary geartrain 142 (see FIGS. 6 and 7) or the star geartrain 144 (see FIGS. 8 and 9). Moreover, where the variable speed transmission 130 of each aircraft propulsion system 24A, 24B is the reversible variable speed transmission, the variable speed transmissions 130 of the aircraft propulsion systems 24A and 24B may (or may not) also share a common transmission configuration, although operated in reverse as described above. Spare parts for the first and the second aircraft propulsion systems 24A and 24B may thereby be significantly reduced because a single replacement turbine engine, a single replacement engine core, a single replacement geartrain, a single replacement variable speed transmission, and/or a single set of parts may be used with either the first aircraft propulsion system 24A or the second aircraft propulsion system 24B.

In some embodiments, the aircraft propulsion systems 24A and 24B may be configured with different (e.g., uniquely configured) drivetrains operatively coupling the turbine engines 56 to the propulsor rotors 62. For example, the geartrain 132 of the first aircraft propulsion system 24A may be configured as the planetary geartrain 142 (see FIGS. 6 and 7). The propulsor rotor 62 of the first aircraft propulsion system 24A may thereby rotate in the first direction during the forward thrust operating mode where the low speed rotating structure 94 of the first aircraft propulsion system 24A rotates in the first direction. By contrast, the geartrain 132 of the second aircraft propulsion system 24B may be configured as the star geartrain 144 (see FIGS. 8 and 9). The propulsor rotor 62 of the second aircraft propulsion system 24B may thereby rotate in the second direction during the forward thrust operating mode where the low speed rotating structure 94 of the second aircraft propulsion system 24B rotates in the first direction. The variable speed transmission 130 of each aircraft propulsion system 24A, 24B may also be configured as the reversible variable speed transmission to facilitate the reverse thrust operating modes without, for example, reversing the propulsor blade pitch. With such an arrangement, the aircraft propulsion systems 24A and 24B may share a common turbine engine configuration, a common engine core configuration, a common nose cone configuration, a common variable speed transmission configuration, and/or at least one or more common internal core components and/or structures; e.g., the rotating structure(s) 90, 94, the combustor 106, etc. Alternatively, the variable speed transmission 130 of each aircraft propulsion system 24A, 24B may be configured as a single direction variable speed transmission. Here, the propulsor blade pitch may be reversed to facilitate the reverse thrust operating mode (as needed).

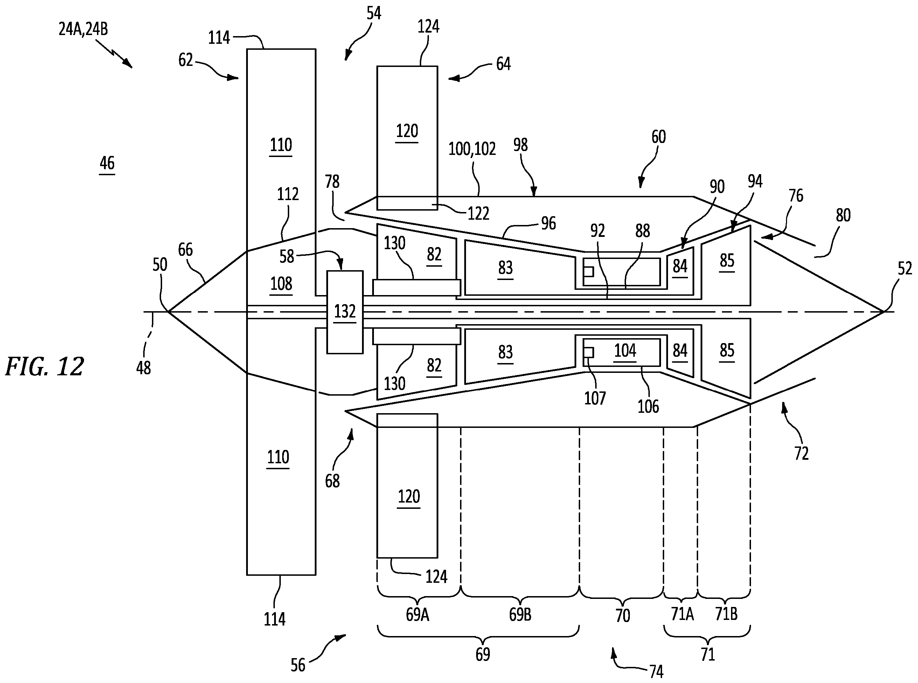

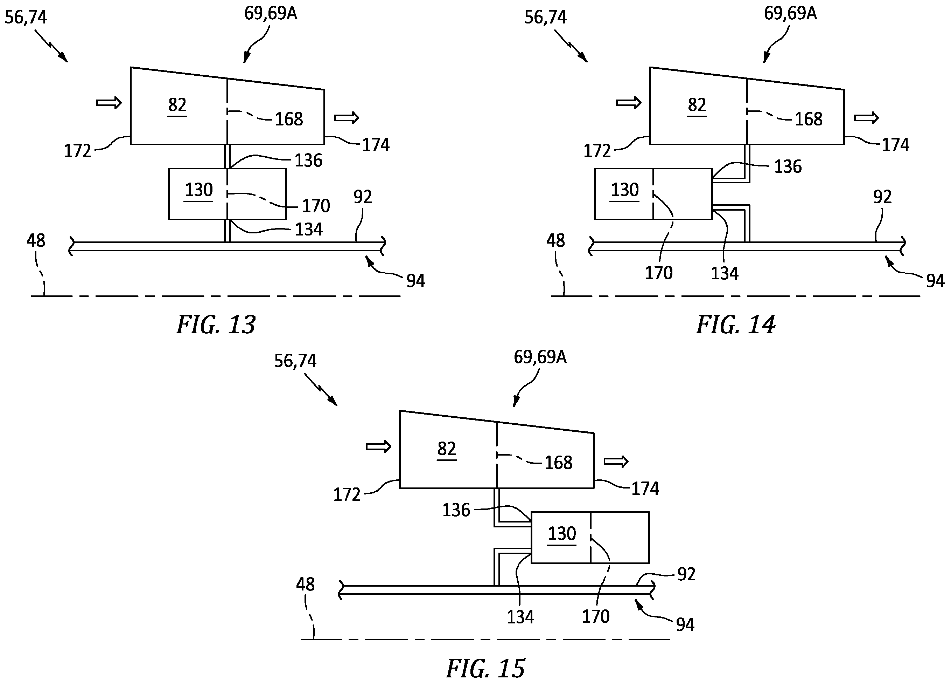

Each aircraft propulsion system 24 is described above as including the variable speed transmission 130 in the drivetrain 58 to provide the variable speed ratio between the low speed rotating structure 94 and the propulsor rotor 62. With this arrangement, a fixed speed ratio is provided between the LPT rotor 85 and the LPC rotor 82. The present disclosure, however, is not limited to such exemplary arrangements. For example, referring to FIG. 12, the variable speed transmission 130 may be omitted from the drivetrain 58 and instead configured between the low speed shaft 92 and the LPC rotor 82. Here, the variable speed transmission 130 of FIG. 12 operatively couples the low speed shaft 92 and the LPC rotor 82. More particularly, referring to FIGS. 13-17, the transmission input 134 is operatively coupled to and (e.g., directly) rotatable with the low speed shaft 92. The transmission output 136 is operatively coupled to and (e.g., directly) rotatable with the LPC rotor 82. With this arrangement, the low speed shaft 92 of FIG. 12 and, thus, the LPT rotor 85 and the propulsor rotor 62 may be run at the substantially constant rotational speed while the rotational speed of the LPC rotor 82 may be varied to provide tailored LPC section operation. This tailored LPC section operation may facilitate increased LPC section efficiency, increased control of LPC section pressure output, and/or the like. To facilitate the symmetric rotating pattern of FIG. 10A or FIG. 10B, the first aircraft propulsion system 24A of FIG. 12 may be configured with the planetary geartrain 142 (see FIGS. 6 and 7) and the second aircraft propulsion system 24B of FIG. 12 may be configured with the star geartrain 144 (see FIGS. 8 and 9) as described above, for example.

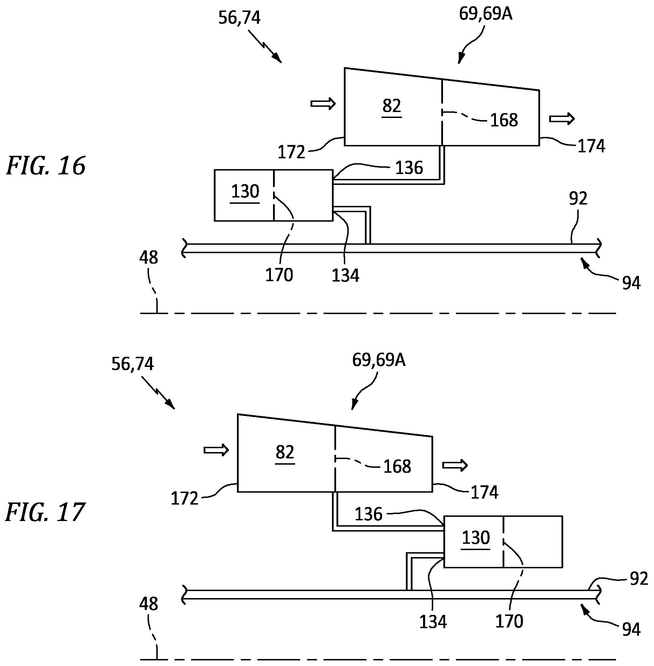

In some embodiments, referring to FIGS. 13-15, the LPC rotor 82 may be disposed radially outboard of, (e.g., partially or completely) axially overlap and circumscribe the variable speed transmission 130. In the arrangement of FIG. 13, an axial center 168 of the LPC rotor 82 is axially aligned with an axial center 170 of the variable speed transmission 130. By contrast, in the arrangements of FIGS. 14 and 15 (see also FIGS. 16 and 17), the axial center 168 of the LPC rotor 82 is axially offset from the axial center 170 of the variable speed transmission 130. The variable speed transmission 130 of FIGS. 14 and 16, for example, is axially offset towards and/or disposed at an axial upstream and/or forward end 172 of the LPC rotor 82. In particular, the axial center 170 of the variable speed transmission 130 of FIG. 14 is axially offset upstream and/or forward of the axial center 168 of the LPC rotor 82. However, the LPC rotor 82 of FIG. 14 may still axially overlap a portion (or an entirety) of the variable speed transmission 130. The variable speed transmission 130 of FIG. 16, on the other hand, is disposed next to (e.g., completely upstream and/or forward of) the LPC rotor 82 and its upstream and/or forward end 172. Here, the variable speed transmission 130 is disposed axially between the LPC rotor 82 and other aircraft propulsion system members (e.g., 62, 132 of FIG. 12). Note, with the arrangements of FIGS. 14 and 16, it is contemplated the variable speed transmission 130 may be more accessible for inspection, maintenance, etc. In another example, the variable speed transmission 130 of FIGS. 15 and 17 is axially offset towards and/or disposed at an axial downstream and/or aft end 174 of the LPC rotor 82. In particular, the axial center 170 of the variable speed transmission 130 of FIG. 15 is axially offset downstream and/or aft of the axial center 168 of the LPC rotor 82. However, the LPC rotor 82 of FIG. 15 may still axially overlap a portion (or an entirety) of the variable speed transmission 130. The variable speed transmission 130 of FIG. 17, on the other hand, is disposed next to (e.g., completely downstream and/or aft of) the LPC rotor 82 and its downstream and/or aft end 174. Here, the variable speed transmission 130 is disposed axially between the LPC rotor 82 and other aircraft propulsion system members (e.g., 83, 106, 84, 85 of FIG. 12).

The engine flowpath 76 of FIGS. 3 and 12 extends longitudinally from the flowpath inlet 78, sequentially through the inlet section 68, the LPC section 69A, the HPC section 69B, the combustor section 70, the HPT section 71A, the LPT section 71B and the exhaust section 72, to the flowpath exhaust 80. The engine flowpath 76 of FIGS. 3 and 12 is configured such that the core air and the combustion products generally flow in the aft, downstream direction towards the propulsion system aft end 52. The core air and the combustion products thereby flow along with the ambient air propelled by the rotating propulsor rotor 62 in a common axial direction - the downstream, aft direction. The turbine engine 56 of the present disclosure, however, is not limited to such an exemplary common flow engine arrangement. For example, the engine flowpath 76 may alternatively be configured such that the core air and the combustion products generally flow in a forward, upstream direction towards the propulsion system forward end 50. The core air and the combustion products may thereby flow in an opposite direction as the ambient air propelled by the rotating propulsor rotor 62. Here, the turbine engine 56 may have a reverse flow engine arrangement.

Each aircraft propulsion system 24 of FIGS. 3 and 12 and its propulsion section 54 are described above with a tractor configuration; e.g., where the propulsor rotor 62 is disposed at or otherwise near the propulsion system forward end 50. It is contemplated, however, the propulsion section 54 may alternatively be disposed at or otherwise near the propulsion system aft end 52 to provide a pusher fan configuration. Moreover, while the turbine engine 56 is described above with a particular two rotating structure arrangement, the present disclosure is not limited thereto. For example, the LPC rotor 82 may be omitted to configure the LPT rotor 85 as a power turbine (PT) rotor for the propulsor rotor 62. In another example, the turbine engine 56 may also include another rotating structure; e.g., an intermediate speed spool for the engine core 74.

The guide vane structure 64 is described above as a fixed (e.g., non-rotatable) guide vane structure. It is contemplated, however, the guide vane structure 64 may alternatively be selectively rotatable about the propulsion system axis 48. With such an arrangement, each aircraft propulsion system 24 may be configured as an open rotor propulsion system with a swirl recovery blade (SRB) open rotor architecture. More particularly, each aircraft propulsion system 24 may operate as: (A) a counter-rotating open rotor (CROR) propulsion system during a dual rotor mode of operation (e.g., when both the propulsor rotor 62 and the structure 64 are counter-rotating about the propulsion system axis 48); and (B) a single open rotor and swirl recovery vane (SRV) propulsion system during a single rotor mode of operation (e.g., when the propulsor rotor 62 is rotating and the structure 64 is rotationally fixed about the propulsion system axis 48). Note, when the guide vane structure 64 is configured to selectively rotate about the propulsion system axis 48, the moving guide vanes 120 operate as propulsor blades 110.

Each aircraft propulsion system of FIGS. 3 and 12 and its propulsion section 54 are described as including the guide vane structure 64 with an SRV or SRB configuration. The present disclosure, however, is not limited to such an exemplary propulsion system configuration. For example, each aircraft propulsion system 24 may alternatively be configured without an open guide vane structure. Each aircraft propulsion system 24 may thereby be configured as a single rotor (SR) open rotor propulsion system.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims.

## Claims

1. An assembly for an aircraft (20), comprising:
a propulsor rotor (62) rotatable about a propulsor axis (48);
a turbine engine (56) configured to drive rotation of the propulsor rotor (62) about the propulsor axis (48), the turbine engine (56) including a flowpath (76), a rotating structure (94), a compressor section (69), a combustor section (70) and a turbine section (71), the flowpath (76) extending through the compressor section (69), the combustor section (70) and the turbine section (71), and the rotating structure (94) rotatable about an engine axis (48) and comprising a bladed turbine rotor (85) in the turbine section (71); and
a drivetrain (58) comprising a reversible variable speed transmission (130), the drivetrain (58) operatively coupling the rotating structure (94) to the propulsor rotor (62) through the reversible variable speed transmission (130).

2. The assembly of claim 1, wherein the reversible variable speed transmission (130) is configured such that
the rotating structure (94) rotates in a first direction about the engine axis (48) and the propulsor rotor (62) rotates in the first direction about the propulsor axis (48) during a first mode of operation; and
the rotating structure (94) rotates in the first direction about the engine axis (48) and the propulsor rotor (62) rotates in a second direction about the propulsor axis (48) during a second mode of operation.

3. The assembly of claim 2, wherein the reversible variable speed transmission (130) is further configured to operatively decouple the rotating structure (94) from the propulsor rotor (62) during a third mode of operation.

4. The assembly of claim 1, 2 or 3, wherein the propulsor rotor (62) comprises an open propulsor rotor.

5. The assembly of claim 4, wherein the open propulsor rotor (62) comprises at least nine propulsor blades (110) arranged circumferentially about the propulsor axis (48) in an annular array.

6. The assembly of claim 4 or 5, further comprising:
a propulsor section (54) including the open propulsor rotor (62) and an open guide vane structure (64);
the open guide vane structure (64) next to and configured to condition air for the open propulsor rotor (62).

7. The assembly of any preceding claim, wherein
the drivetrain (58) further comprises a geartrain (132); and
the drivetrain (58) operatively couples the rotating structure (94) to the propulsor rotor (62) through the reversible variable speed transmission (130) and the geartrain (132).

8. The assembly of claim 7, wherein the geartrain (132) comprises an epicyclic geartrain, or wherein the geartrain (132) comprises one of a planetary geartrain (142) or a star geartrain (144).

9. The assembly of claim 7 or 8, wherein the geartrain (132) operatively couples the reversible variable speed transmission (130) to the propulsor rotor (62).

10. The assembly of claim 7 or 8, wherein the reversible variable speed transmission (130) operatively couples the geartrain (132) to the propulsor rotor (62).

11. The assembly of any preceding claim, further comprising:
a first propulsion system (24A) including the propulsor rotor (62), the turbine engine (56) and the drivetrain (58), the rotating structure (94) configured to rotate in a first direction about the engine axis (48) and the propulsor rotor (62) configured to rotate in the first direction about the propulsor axis (48) during a forward thrust mode of operation for the first propulsion system (24A); and
a second propulsion system (24B) including a second propulsor rotor (62), a second turbine engine (56) and a second drivetrain (58);
the second propulsor rotor (62) rotatable about a second propulsor axis (48);
the second turbine engine (56) configured to drive rotation of the second propulsor rotor (62) about the second propulsor axis (48), the second turbine engine (56) including a second flowpath (76), a second rotating structure (94), a second compressor section (69), a second combustor section (70) and a second turbine section (71), the second flowpath (76) extending through the second compressor section (69), the second combustor section (70) and the second turbine section (71), and the second rotating structure (94) rotatable about a second engine axis (48) and comprising a second bladed turbine rotor (85) in the second turbine section (71);
the second drivetrain (58) comprising a second reversible variable speed transmission (130), and the second drivetrain (58) operatively coupling the second rotating structure (94) to the second propulsor rotor (62) through the second reversible variable speed transmission (130); and
the second rotating structure (94) configured to rotate in the first direction about the second engine axis (48) and the second propulsor rotor (62) configured to rotate in a second direction about the second propulsor axis (48) during a forward thrust mode of operation for the second propulsion system (24B).

12. The assembly of claim 11, wherein at least one of
the rotating structure (94) and the second rotating structure (94) share a common configuration; or
the turbine engine (56) and the second turbine engine (56) share a common configuration.

13. The assembly of claim 11 or 12, wherein the first propulsion system (24A) and the second propulsion system (24B) are each configured as an open rotor propulsion system.

14. An assembly for an aircraft (20), comprising:
a propulsor rotor (62) rotatable about a propulsor axis (48);
a turbine engine (56) configured to drive rotation of the propulsor rotor (62) about the propulsor axis (48), the turbine engine (56) including a flowpath (76), a rotating structure (94), a compressor section (69), a combustor section (70) and a turbine section (71), the flowpath (76) extending through the compressor section (69), the combustor section (70) and the turbine section (71), and the rotating structure (94) rotatable about an engine axis (48) and comprising a bladed turbine rotor (85) in the turbine section (71); and
a drivetrain (58) comprising a variable speed transmission (130) and an epicyclic geartrain (132), the drivetrain (58) operatively coupling the rotating structure (94) to the propulsor rotor (62) serially through the epicyclic geartrain (132) and the variable speed transmission (130).

15. The assembly of claim 14, wherein the propulsor rotor (62) comprises an open propulsor rotor, and the variable speed transmission (130) is configured such that
the rotating structure (94) rotates in a first direction about the engine axis (48) and the propulsor rotor (62) rotates in the first direction about the propulsor axis (48) during a first mode of operation; and
the rotating structure (94) rotates in the first direction about the engine axis (48) and the propulsor rotor (62) rotates in a second direction about the propulsor axis (48) during a second mode of operation.
